# FASCICULE DE BREVET EUROPEEN

(11) **EP 0 596 035 B1**
(45) Date de publication et mention de la délivrance du brevet: **15.03.1995**
(21) Numéro de dépôt: 92917753.3
(22) Date de dépôt: 29.07.1992
(51) Int. Cl.: F25D 21/14, F25D 17/06, F24F 13/22

(54) **APPAREIL FRIGORIFIQUE A MONTAGE UNIVERSEL POUR UN REFROIDISSEMENT D'AIR AVEC DES MOYENS DE COLLECTE ET D'EVACUATION DE CONDENSATS**
VIELSEITIG MONTIERBARE KÜHLANLAGE FÜR KÜHLUNG VON LUFT MIT MITTELN ZUM SAMMELN UND BESEITIGEN VON KONDENSATOREN
REFRIGERATION APPARATUS FOR COOLING AIR CAPABLE OF BEING MOUNTED IN ANY POSITION AND HAVING MEANS FOR COLLECTING AND REMOVING CONDENSATES

(30) Priorité: 02.08.1991 FR 9110110
(43) Date de publication de la demande: 11.05.1994
(73) Titulaire: THERMOFROID S.A., F-26270 Loriol (FR)
(72) Inventeur: RIPERT, Michel, Elie, F-26270 Loriol (FR)
(74) Mandataire: Thibault, Jean-Marc
(86) Numéro de dépôt international: FR9200742
(87) Numéro de publication internationale: WO9303317

(56) Documents cités:
- FR-A- 928 417
- FR-A- 1 254 698
- FR-A- 1 584 013
- FR-A- 2 648 306
- FR-E- 57 097
- US-A- 3 379 329
- US-A- 3 404 539
- US-A- 3 724 233
- US-A- 4 365 484

## Description

### DOMAINE TECHNIQUE :

La présente invention concerne un appareil frigorifique tel que défini dans le préambule de la revendication 1. Un tel appareil est connu, par exemple, du document FR-A-2 648 306 et est apte à être monté sur un véhicule, notamment sur la cabine des engins de travaux publics.

### TECHNIQUE ANTERIEURE :

D'une manière générale, un appareil frigorifique comporte un carter dans lequel sont montés un échangeur de chaleur traversé par un fluide frigorigène et un ventilateur assurant une circulation de l'air. Le carter de cet appareil peut être aménagé pour présenter une entrée d'aspiration de l'air à traiter et une sortie de refoulement de l'air traité. L'entrée et la sortie de ce carter communiquent alors avec des ouvertures ménagées dans l'enceinte sur laquelle doit être monté l'appareil frigorifique.

Dans la mesure où l'échangeur de chaleur a une température inférieure à celle de l'air contenu dans la cabine, une humidité se dépose, sous forme d'eau de condensation ou de givre, sur les surfaces de l'échangeur de chaleur. La collecte des condensats, résultant du passage de l'air à travers l'échangeur, est généralement assurée par l'intermédiaire d'un bac de récupération disposé en dessous de l'échangeur de chaleur.

Un tel appareil frigorifique est implanté en fonction des caractéristiques constructives des enceintes, soit au-dessus, soit en dessous, soit sur les côtés, à l'intérieur ou à l'extérieur de la cabine. Pour répondre aux diverses possibilités de montage, il convient de retenir quatre types de fabrications d'appareils frigorifiques permettant chacune d'assurer la fonction de collecte et d'évacuation des condensats.

Par ailleurs, dans le cas où l'appareil frigorifique équipe un véhicule susceptible de changer d'assiette, il apparaît clair que la collecte et l'évacuation des condensats ne peuvent plus être assurées par les dispositifs connus. De plus, il est impératif, afin de ne pas détériorer les équipements électroniques ou les enceintes à traiter, qu'aucun produit liquide (eau, liquide de refroidissement, etc) ne puisse sortir du caisson de traitement par les bouches de soufflage ou de reprise d'air traité.

Il apparaît donc le besoin de disposer d'un appareil frigorifique capable d'être adapté selon différentes positions, tout en permettant, à chaque fois, d'assurer une fonction de collecte et d'évacuation des condensats.

### EXPOSE DE L'INVENTION :

La présente invention vise donc à atteindre ces objectifs en proposant un appareil frigorifique capable de collecter et d'évacuer les condensats, dans toutes les positions de montage de l'appareil frigorifique, sur ou dans une enceinte au sens général.

Pour atteindre cet objectif, l'appareil frigorifique est tel que défini en revendication 1.

La réalisation de tels moyens de collecte et d'évacuation, au niveau du carter de l'appareil frigorifique, permet d'obtenir une unité frigorifique de montage universel présentant un encombrement réduit.

Selon une caractéristique avantageuse, les moyens de collecte et d'évacuation des condensats, sont constitués par au moins :
- un châssis :
   . s'étendant suivant un plan sensiblement parallèle à l'axe de montage,
   . à partir duquel s'élève l'échangeur,
   . aménagé pour comporter un réseau de canaux de récupération des condensats débouchant à au moins un orifice d'évacuation des condensats, dit de position horizontale,
   . pourvu d'un déflecteur des condensats s'étendant de manière inclinée vers l'intérieur du carter, entre l'échangeur et l'entrée d'aspiration,
- et une paroi de collecte :
   . s'élevant à partir du châssis, sur une hauteur au moins égale à celle de l'échangeur et selon une direction opposée de celle du déflecteur,
   . pourvue, au niveau du châssis, d'un orifice d'évacuation, dit de position verticale.

### BREVE DESCRIPTION DES DESSINS :

Divers autres avantages ressortent de la description faite ci-dessous en référence aux dessins annexés qui montrent, à titre d'exemples non limitatifs, des formes de réalisation de l'objet de l'invention.

La **fig. 1** est une vue en coupe, en élévation, montrant l'appareil frigorifique conforme à l'invention.

La **fig. 2** est une vue de l'appareil, sans son capot protecteur, permettant de mettre en évidence les différents éléments montés à l'intérieur de l'appareil.

Les **fig. 3** et **4** sont des vues en plan montrant le capot protecteur de l'appareil, respectivement selon chacune de ses faces principales.

Les **fig. 5A à 5H** sont des vues montrant les différentes positions de montage possibles de l'appareil selon l'invention suivant un exemple d'un axe d'implantation donné.

La **fig. 6** est une vue en coupe montrant une variante de réalisation de l'appareil selon l'invention.

### MEILLEURE MANIERE DE REALISER L'INVENTION :

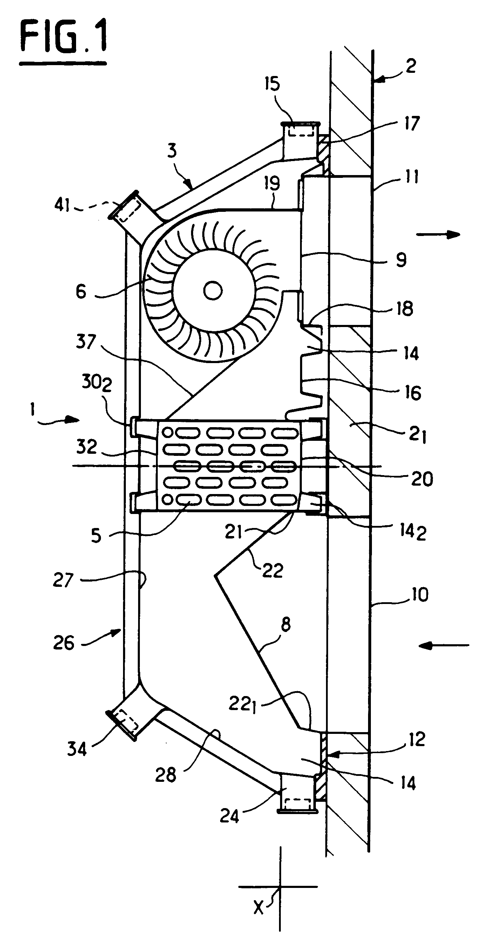

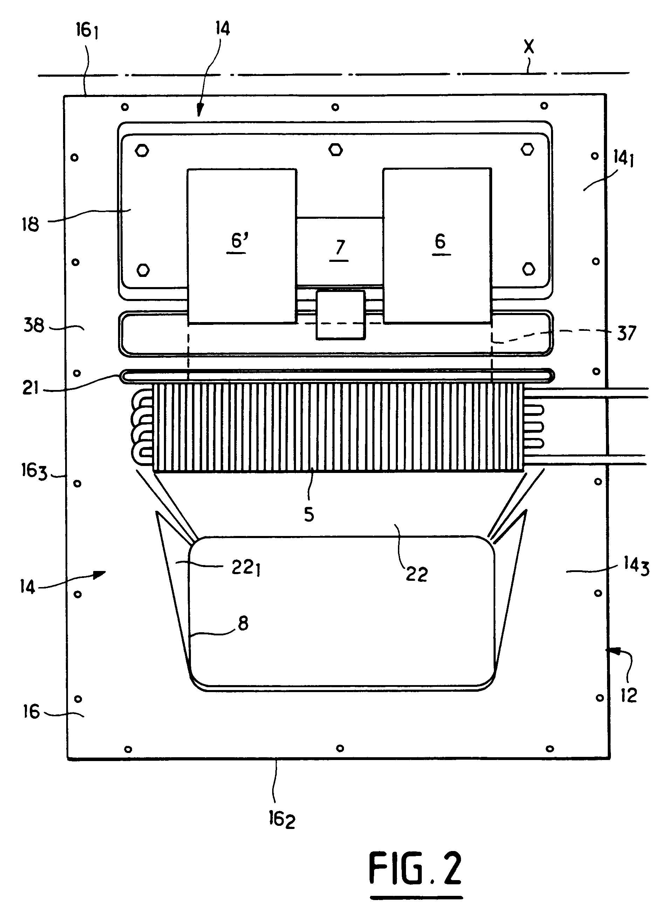

Les **fig. 1** et **2** illustrent un appareil frigorifique **1** conforme à l'invention, destiné à refroidir l'air d'une chambre ou d'une enceinte **2** constituant, par exemple, une cabine **2** d'un véhicule, notamment d'un engin de travaux publics. L'appareil frigorifique **1** comporte un carter **3** contenant un échangeur de chaleur **5**, dans lequel circule un fluide frigorigène, et au moins un et, dans l'exemple illustré, deux ventilateurs **6, 6′** destinés à assurer une circulation d'air entre l'appareil **1** et le volume interne de l'enceinte **2**.

Les ventilateurs **6, 6′** sont entraînés en rotation par l'intermédiaire d'un moteur électrique **7** monté, avantageusement, entre les deux ventilateurs **6, 6**′, comme cela apparaît plus précisément à la **fig. 2**. Le carter **3** est aménagé pour comporter une entrée d'aspiration **8** et une sortie **9** de refoulement de l'air traité. L'entrée **8** et la sortie **9** sont ménagées en relation, respectivement, d'ouvertures **10** et **11** réalisées dans la paroi **2₁** de l'enceinte, de manière à mettre en communication le volume interne de l'enceinte avec le volume intérieur de l'appareil frigorifique **1**.

Selon l'invention, le carter **3** est agencé intérieurement pour présenter des moyens fixes assurant une collecte et une évacuation des condensats dans toutes les positions de montage de l'appareil sur l'enceinte.

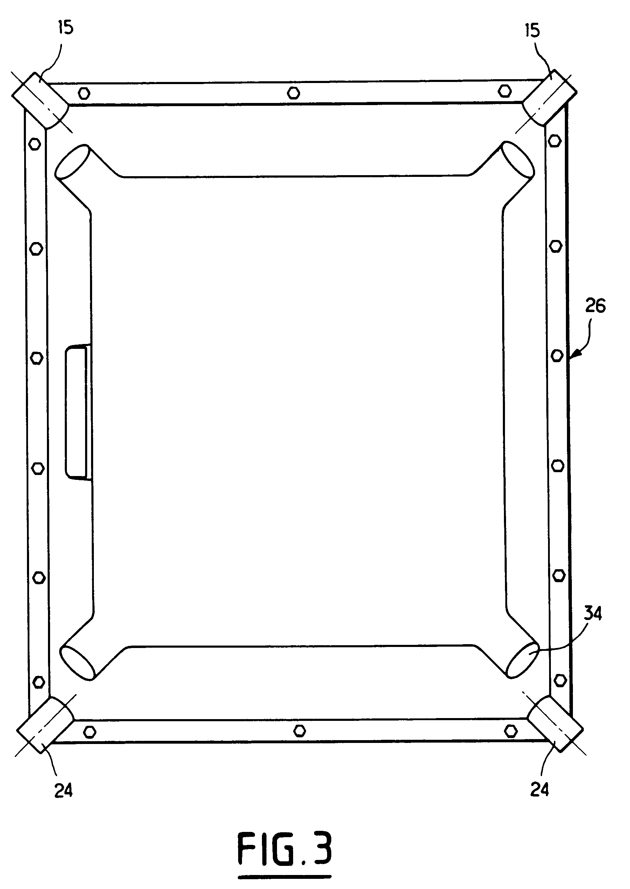

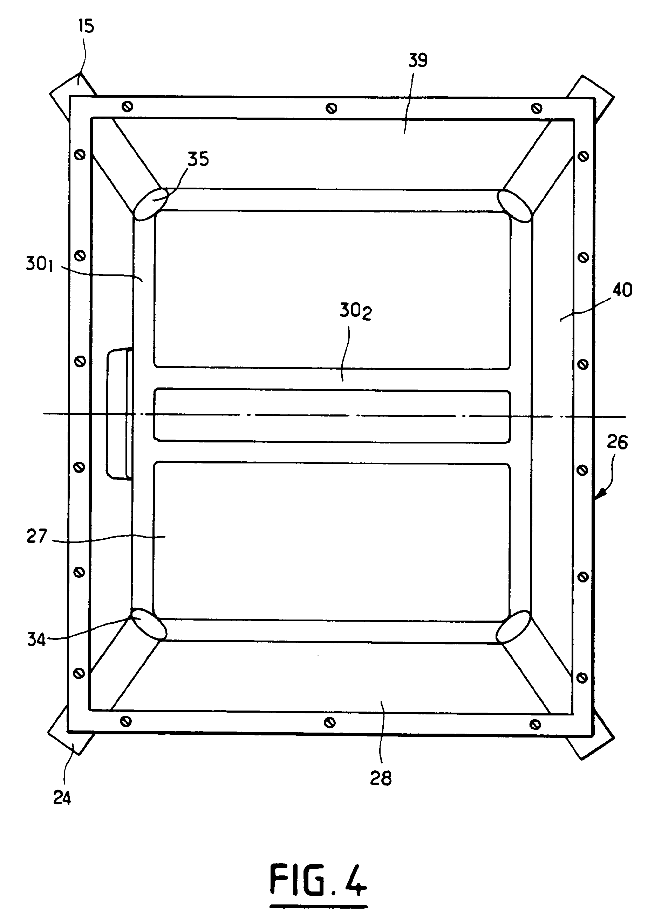

Les moyens de collecte et d'évacuation des condensats sont constitués, notamment, par un châssis **12** s'étendant suivant un plan qui est sensiblement parallèle à un axe de montage **X** pris à titre d'exemple dans la suite de la description. L'échangeur **5** s'élève, à partir du châssis **12**, sur une hauteur déterminée pour s'étendre transversalement à l'intérieur de l'appareil **1**, sensiblement dans sa région centrale. Le châssis **12** est aménagé pour comporter un réseau de canaux **14** assurant la récupération des condensats et débouchant à au moins un et, dans l'exemple illustré, à deux orifices d'évacuation **15**, dits de position horizontale (**fig. 3** et **4**). Ces orifices **15** permettent d'évacuer les condensats lorsque l'appareil **1** occupe une position horizontale, comme cela ressort plus précisément de la **fig. 5A.**

Dans l'exemple illustré, le châssis **12** est constitué d'une plaque **16** et d'un couvercle de protection **17** pourvu de passages correspondant à l'entrée d'aspiration **8** et à la sortie d'air **9**. Une semelle **18**, de support et d'adaptation des ventilateurs **6, 6′** et de l'organe moteur **7**, est interposée entre la plaque **16** et le couvercle **17**. La plaque **16** est assemblée de manière étanche à la semelle **18** qui s'étend en saillie à partir de la plaque **16**, entre le bord transversal **16₁** de la plaque et l'échangeur **5**. La semelle **18** permet le montage de la tubulure de sortie **19** de chaque ventilateur **6**, **6**′ qui délimite la sortie de refoulement **9**. Cette tubulure **19** est montée de manière étanche sur la semelle saillante **18** qui définit, par rapport à la plaque **16**, un canal périphérique **14₁**.

La plaque **16** est conformée pour comporter un talon **20** d'appui pour l'échangeur **5**, délimitant, de part et d'autre, un canal transversal **14₂** s'étendant en relation d'aplomb avec l'échangeur **5** et à distance des bords longitudinaux **16₃** de la plaque. La plaque **16** comporte aussi des butées **21** s'étendant de chaque côté des canaux **14₂** et assurant un centrage de l'échangeur **5**. Les canaux **14₂** communiquent avec les canaux **14₁**, en vue d'évacuer les condensats en direction du bord transversal **16₁** au niveau duquel sont positionnés les orifices **15**.

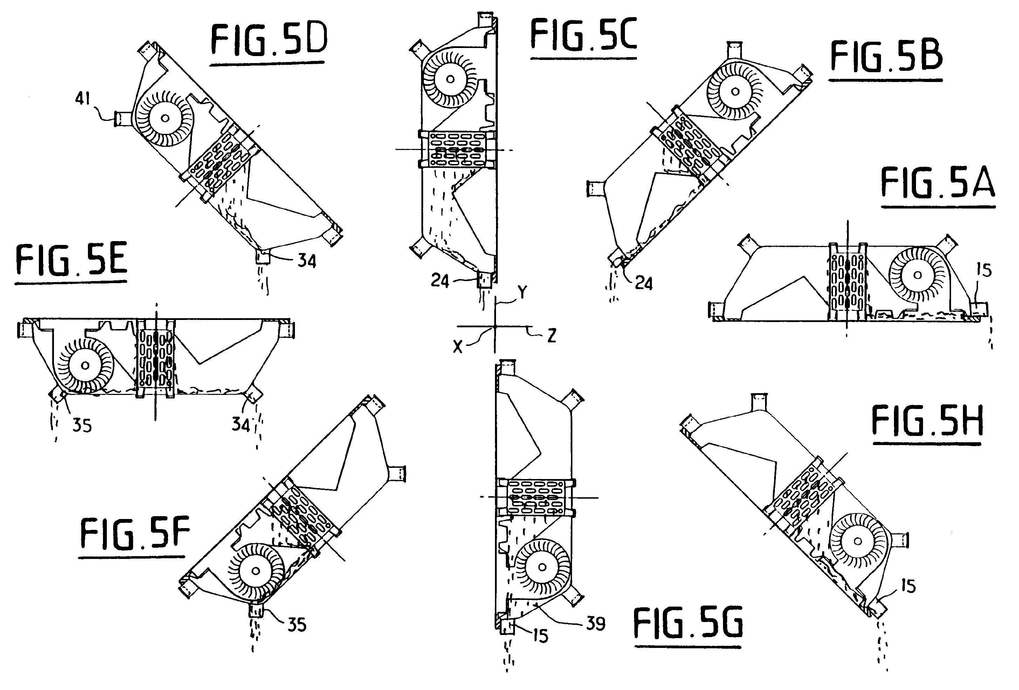

La plaque **16** est, également, pourvue d'un déflecteur **22** des condensats s'étendant de manière inclinée vers l'intérieur du carter, en direction du bord transversal **16₂** opposé à celui **16₁** de la plaque, entre l'échangeur **5** et l'entrée d'aspiration **8**. Le déflecteur **22** s'étend sur une hauteur déterminée, de manière à interdire la sortie des condensats par l'entrée d'aspiration **8** lorsque l'appareil **1** occupe une position donnée, par exemple celle représentée à la **fig. 5B** et définie entre la position horizontale (**fig. 5A**) et la position verticale (**fig. 5C)**. Lorsque l'appareil occupe une position inclinée, par exemple inférieure à 45°, le déflecteur **22** canalise les condensats en direction de la plaque **16**. Les condensats s'écoulent, comme représenté par les ondulations **c** sur la **fig. 5B**, dans des canaux **14₃** définis autour de l'ouverture **8** qui est bordée par un retour périphérique **22₁** prolongeant le déflecteur **22** et s'étendant en saillie par rapport à la plaque **16**. Ces canaux **14₃**, qui communiquent avec les canaux **14₁** et **14₂**, permettent de canaliser les condensats en direction du bord **16₂** de la plaque au niveau duquel sont placés au moins un et, par exemple, deux orifices **24** d'évacuation des condensats, dits de position verticale (**fig. 5B, 5C**).

De préférence, la plaque **16** est réalisée par moulage en un matériau plastique et se trouve conformée pour présenter les différents canaux **14₁**, **14₂**, **14₃** délimités par les parties saillantes **18, 20, 21** et **22₁**. Bien entendu, la plaque **16**, le couvercle **17** et la semelle **18** peuvent constituer une pièce unique, de manière à réaliser un châssis monobloc.

Les moyens de collecte et d'évacuation sont constitués, également, par un capot **26** comportant une partie centrale plane **27** s'étendant dans un plan sensiblement parallèle à celui contenant le châssis **12** et placé en relation de l'échangeur **5**, du côté opposé de celui occupé par le châssis **12**. Le capot **26** comporte une paroi inclinée **28** prolongeant la partie centrale **27** et s'étendant en direction du bord transversal **16₂** de la plaque **16**, selon une direction opposée de celle prise par le déflecteur **22**. Cette paroi inclinée **28** est prévue pour comporter, à chacun de ses coins, un orifice **24** d'évacuation, dit de position verticale.

Tel que cela apparaît plus précisément à la **fig. 4**, le capot **26** comporte un réseau de gouttières comportant des gouttières **30₁** ménagées à la périphérie de la partie centrale **27**. Ces gouttières périphériques **30₁** communiquent avec deux gouttières transversales **30₂** destinées à recevoir une pièce **32** de centrage de l'échangeur, tel que cela ressort clairement de la **fig. 1**.

Les gouttières **30₁** communiquent avec au moins un et, dans l'exemple illustré, deux orifices **34** d'évacuation, dits de position horizontale inversée, ménagés au niveau du plan de jonction de la paroi inclinée **28**, à chaque coin de la plaque **27**. Les orifices **34** sont destinés à évacuer les condensats lorsque l'appareil **1** occupe une position donnée, par exemple celle représentée à la **fig. 5D** et définie entre la position verticale (**fig. 5C**) et une position horizontale inversée (**fig. 5E**).

Tel que cela ressort plus précisément de la **fig. 5D**, les condensats sont collectés par la partie centrale **27** du capot, puis canalisés dans les gouttières **30₁**, en vue de leur évacuation par les orifices **34**. Avantageusement, la gouttière **30₁** communique avec au moins un et, dans l'exemple illustré, deux orifices d'évacuation **35**, dits de position horizontale inversée inclinée, ménagés aux coins opposés de ceux comportant les orifices **34**.

Les moyens de collecte et d'évacuation des condensats sont constitués, également, par une paroi, telle qu'une plaque déflectrice **37** s'étendant sensiblement à partir du capot **26**, en direction de la plaque **16**, dans un plan sensiblement parallèle à celui du déflecteur **22**. Cette plaque **37**, qui est représentée en pointillé sur la **fig. 2**, s'étend, entre l'échangeur **5** et les ventilateurs **6, 6′**, en relation d'aplomb de l'entrée d'air des ventilateurs, non représentée. Avantageusement, la plaque **37** s'étend, également, à l'aplomb de l'organe moteur **7** en laissant subsister, de part et d'autre de ses bords latéraux, un passage de communication **38**.

La plaque **37** évite que les condensats pénètrent dans l'entrée d'air des ventilateurs **6, 6′** lorsque l'appareil **1** occupe une position donnée, par exemple celle illustrée à la **fig. 5F** et définie entre la position horizontale inversée (**fig. 5E**) et une position verticale inversée (**fig. 5G**). Dans la position inclinée illustrée à la fig. **5F**, la plaque déflectrice **37** dirige les condensats en direction du capot **26** qui assure leur collecte à l'aide des gouttières **30₁**, **30₂**, en vue de leur évacuation par les orifices **35**. Dans cette position, il est à noter qu'une partie des condensats, qui tombent au niveau du passage de communication **38**, sont collectés directement par le capot **26**.

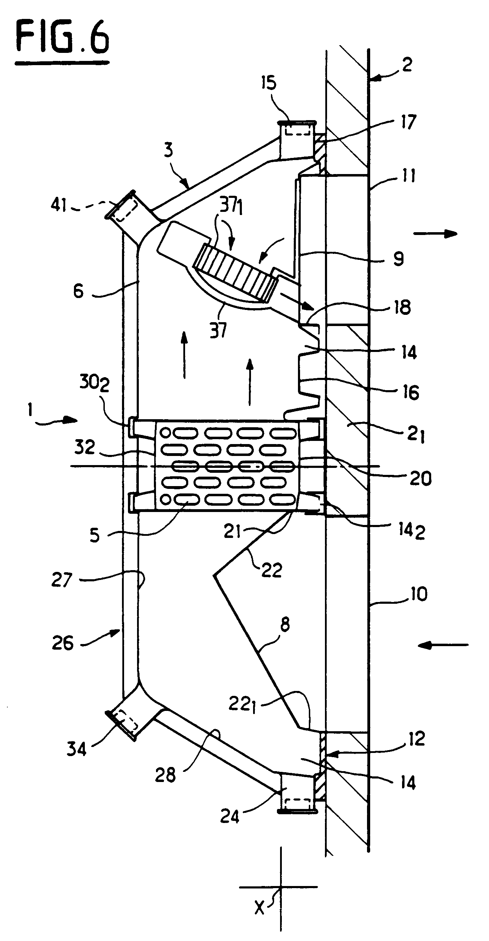

Il est à noter, comme illustré à la **fig. 6**, que la paroi déflectrice **37** peut être constituée directement par le corps de protection d'une turbine intégrant un moteur et un ventilateur. Une telle turbine se présente sous la forme d'un corps monobloc comportant une entrée d'aspiration **37₁** ménagée sur le corps à l'opposé de l'échangeur **5**. La turbine s'étend à partir de la semelle **18** en direction opposée de l'échangeur, selon un angle sensiblement de l'ordre de 45°, afin d'assurer la déviation des condensats et d'interdire leur pénétration, par l'entrée **37₁**, à l'intérieur de la turbine.

Comme cela ressort plus précisément des **fig. 3, 4 et 5G**, le capot **26** comporte, également, une paroi de collecte **39**, identique à la paroi inclinée **28**, et raccordée avec cette dernière par des parois latérales inclinées **40** pour former ensemble un retour ou un bord périphérique du capot **26**. Bien entendu, le capot **26** est monté de manière étanche sur le châssis **12**. La paroi de collecte **39** comporte, au niveau de sa partie terminale libre, les deux orifices **15** ménagés aux coins opposés de ceux comportant les orifices **24**. La paroi de collecte **39** est destinée à recueillir, lorsque l'appareil occupe une position verticale inversée **(fig. 5G**), les condensats dont une partie provient directement de l'échangeur en passant par le passage de communication **38**. L'autre partie des condensats, qui sont défléchis par la plaque **37**, sont canalisés en direction de la semelle **18** en passant autour de la tubulure de sortie **19** de chaque ventilateur, en vue d'être évacués par les orifices **15**.

Lorsque l'appareil **1** occupe une position donnée, par exemple celle illustrée à la **fig. 5H** et définie entre la position verticale inversée (**fig. 5G**) et la position horizontale (**fig. 5A**), les condensats sont collectés au niveau de la surface supérieure de la semelle **18** et des canaux **14** de la plaque **16**.

L'appareil selon l'invention peut donc être adapté sur une enceinte selon les différentes positions prises autour de l'axe de montage **X**, comme cela a été décrit ci-dessus, en relation des figures. L'appareil selon l'invention peut, également, occuper toutes les positions prises autour de l'axe de montage vertical **Y**. Selon les positions d'installation, les condensats sont recueillis par le châssis. Par ailleurs, l'appareil peut, également, être placé selon toutes les positions prises suivant l'axe horizontal **Z** qui est perpendiculaire aux axes **X** et **Y**. Dans ces positions, les condensats sont recueillis, principalement, par les parois latérales **40** du capot **26**. Les moyens selon l'invention, de collecte et d'évacuation des condensats, autorisent donc un montage universel de l'appareil frigorifique sur une enceinte. Ce montage est d'autant plus universel que la réalisation d'une manière fixe, des moyens de collecte et d'évacuation sur le carter **3**, n'impose pas une adaptation particulière de l'appareil en fonction de l'application visée.

Par ailleurs, dans le cas où l'appareil frigorifique est installé sur un véhicule, notamment un engin de travaux publics, il est à noter que les variations d'assiette transmises à l'appareil n'empêchent pas ce dernier de continuer à assurer sa fonction d'évacation des condensats.

Bien entendu, les orifices d'évacuation, qui ne sont pas utilisés pour évacuer les condensats lorsque l'appareil est adapté selon une position donnée, sont fermés chacun par un bouchon d'obturation **41**.

Par ailleurs, il est à noter que, malgré une fuite de liquide réfrigérant sous pression, aucun produit liquide ne peut sortir par les bouches d'aspiration et de soufflage.

L'invention n'est pas limitée aux exemples décrits et représentés, car diverses modifications peuvent y être apportées sans sortir de son cadre.

### POSSIBILITE D'APPLICATION INDUSTRIELLE :

L'appareil frigorique selon l'invention peut être appliqué au refroidissement de l'enceinte d'un véhicule.

## Revendications

1. Appareil frigorifique destiné à être monté sur une enceinte (**2**) et comportant un carter (**3**) dans lequel sont montés, au moins un ventilateur (**6, 6′**) et un échangeur de chaleur (**5**), le ventilateur (**6, 6′**) assurant une circulation de l'air entre une entrée (**8**) d'aspiration de l'air à traiter et une sortie (**9**) de refoulement de l'air traité, l'appareil étant associé notamment à des moyens assurant la collecte et l'évacuation des condensats résultant du passage de l'air à travers l'échangeur,
caractérisé en ce que le carter (**3**) est agencé intérieurement de manière à comporter des moyens fixes de collecte (**12, 22, 26, 37, 39**) et d'évacuation (**15, 24, 34, 35**) des condensats dans toutes les positions de montage de l'appareil frigorifique.

2. Appareil selon la revendication 1, caractérisé en ce que les moyens de collecte et d'évacuation sont constitués par au moins :
- un châssis (**12**) :
. s'étendant suivant un plan sensiblement parallèle à l'axe (**X**) de montage,
. à partir duquel s'élève l'échangeur,
. aménagé pour comporter un réseau de canaux (**14**) de récupération des condensats débouchant à au moins un orifice (**15**) d'évacuation des condensats, dit de position horizontale,
. pourvu d'un déflecteur (**22**) des condensats s'étendant de manière inclinée vers l'intérieur du carter, entre l'échangeur et l'entrée d'aspiration,
- et une paroi de collecte (**28**) :
. s'élevant à partir du châssis, sur une hauteur au moins égale à celle de l'échangeur et selon une direction opposée de celle du déflecteur (**22**),
. pourvue, au niveau du châssis, d'un orifice (**24**) d'évacuation, dit de position verticale.

3. Appareil selon la revendication 2, caractérisé en ce que la paroi de collecte (**28**) fait partie intégrante d'un capot (**26**) comportant une partie centrale (**27**) s'étendant dans un plan sensiblement parallèle à celui contenant le châssis et placé en relation de l'échangeur, du côté opposé de celui occupé par le châssis (**12**), la partie centrale comportant un réseau de gouttières (**30₁**, **30₂**) communiquant, à chaque extrémité de la partie centrale, avec au moins un orifice d'évacuation (**34, 35**), dit de position horizontale inversée.

4. Appareil selon la revendication 2 ou 3, caractérisé en ce que les gouttières (**30₁**) et/ou les canaux (**14**) assurent le centrage de l'echangeur (**5**).

5. Appareil selon la revendication 3, caractérisé en ce que les moyens de collecte des condensats sont constitués par une paroi (**37**) déflectrice des condensats, s'étendant à partir du capot (**26**), entre l'échangeur et le ventilateur et en relation d'aplomb du passage d'entrée d'air du ventilateur.

6. Appareil selon la revendication 5, caractérisé en ce que la paroi déflectrice (**37**) s'étend également en relation d'aplomb d'un organe moteur (**7**) d'entraînement en rotation du ventilateur.

7. Appareil selon la revendication 3, caractérisé en ce que le capot (**26**) comporte, à la partie opposée de celle munie d'un orifice d'évacuation (**24**), dit de position verticale, un orifice d'évacuation (**15**), dit de position verticale inversée, communiquant avec une paroi de collecte (**39**) s'étendant en relation du ventilateur (**6**) dont la sortie d'air est montée de façon étanche sur le châssis.

8. Appareil selon la revendication 7, caractérisé en ce que le capot (**26**) comporte deux parois latérales inclinées (**40**) formant, avec les parois de collecte (**28** et **39**), un bord périphérique monté de manière étanche sur le châssis (**12**).

9. Appareil selon la revendication 2, caractérisé en ce que le châssis (**12**) est constitué d'une semelle (**18**) de support du ventilateur et d'une plaque (**16**) conformée pour comporter le réseau de canaux (**14**) s'établissant en relation de l'échangeur et du ventilateur, la semelle (**18**) et la plaque (**16**) étant revêtues par un couvercle (**17**) de protection.

10. Appareil selon la revendication 9, caractérisé en ce que le châssis (**12**) est réalisé en une pièce unique.

## Patentansprüche

1. Kühlvorrichtung, die dazu gedacht ist, an einem Raum (2) montiert zu werden, und aus einem Gehäuse (3) besteht, in dem mindestens ein Ventilator (6, 6′) und ein Wärmetauscher (5) angebracht sind, wobei der Ventilator (6, 6′) eine Luftzirkulation zwischen einem Eingang (8) zum Einsaugen der zu behandelnden Luft und einen Ausgang (9) zur Abgabe der behandelten Luft gewährleistet, wobei die Vorrichtung insbesondere mit Mitteln zum Auffangen und Ablassen der Kondensate verbunden ist, die sich bei dem Durchströmen der Luft durch den Wärmetauscher ergeben,
dadurch gekennzeichnet, daß das Gehäuse (3) innen dergestalt konzipiert ist, daß es feststehende Mittel zum Auffangen (12, 22, 26, 37, 39) und Mittel zum Ablassen (15, 24, 34, 35) der Kondensate in allen Einbaupositionen der Kühlvorrichtung aufweist.

2. Vorrichtung nach Anspruch 1,
dadurch gekennzeichnet, daß die Mittel zum Auffangen und zum Ablassen mindestens bestehen aus:
- einem Rahmen (12),
- der sich in einer im wesentlichen parallel zur Montageachse (X) befindlichen Ebene erstreckt,
- von dem sich der Wärmetauscher aufwärts erstreckt,
- der so eingerichtet ist, daß er ein Netz von Kanälen (14) zum Auffangen der Kondensate aufweist, das in mindestens eine Öffnung (15) zum Ablassen des Kondensats in waagerechter Stellung mündet,
- der mit einem Kondensatdeflektor (22) versehen ist, welcher sich zwischen dem Wärmetauscher und dem Ansaugeingang mit einer Neigung ins Innere des Gehäuses erstreckt,
- und einer Auffangwand (28),
- die sich von dem Rahmen weg bis zu einer Höhe, die mindestens gleich der des Tauschers ist, und in der entgegengesetzten Richtung zu der des Deflektors (22) erstreckt,
- die in Höhe des Rahmens mit einer Ablaßöffnung (24) in senkrechter Stellung versehen ist.

3. Vorrichtung nach Anspruch 2,
dadurch gekennzeichnet, daß die Auffangwand (28) einen integrierenden Bestandteil einer Klappe (26) bildet, die einen zentralen Teil (27) aufweist, der sich in einer im wesentlichen parallel zu der Ebene des Rahmens liegenden Ebene erstreckt, und die auf der Seite des Wärmetauschers angeordnet ist, die der von dem Rahmen (12) eingenommenen Seite gegenüberliegt, wobei der zentrale Teil ein Netz von Ablaufkanälen (30₁, 30₂) aufweist, die an jedem Ende des zentralen Teils mit mindestens einer Ablaßöffnung (34, 35) in umgekehrter waagerechter Stellung in Verbindung stehen.

4. Vorrichtung nach Anspruch 2 oder 3,
dadurch gekennzeichnet, daß die Ablaufkanäle (30₁) und/oder die Kanäle (14) die Zentrierung des Wärmetauschers (5) gewährleisten.

5. Vorrichtung nach Anspruch 3,
dadurch gekennzeichnet, daß die Kondensatauffangmittel aus einer die Kondensate ablenkenden Wand (37) bestehen, die sich zwischen dem Wärmetauscher und dem Ventilator und senkrecht zu dem Lufteingangsdurchlaß des Ventilators von der Klappe (26) weg erstreckt.

6. Vorrichtung nach Anspruch 5,
dadurch gekennzeichnet, daß die ablenkende Wand (37) sich auch senkrecht zu einem Antriebsorgan (7) für die Drehbewegung des Ventilators erstreckt.

7. Vorrichtung nach Anspruch 3,
dadurch gekennzeichnet, daß die Klappe (26) in dem gegenüberliegenden Teil zu dem, der mit einer Ablaßöffnung (24) mit senkrechter Stellung versehen ist, eine Ablaßöffnung (15) mit umgekehrter senkrechter Stellung aufweist, die mit einer Auffangwand (39) in Verbindung steht, welche sich in Relation zu dem Ventilator (6) erstreckt, dessen Luftauslaß dicht an dem Rahmen montiert ist.

8. Vorrichtung nach Anspruch 7,
dadurch gekennzeichnet, daß die Klappe (26) zwei geneigte Seitenwände (40) aufweist, die mit den Auffangwänden (28 und 39) einen Außenrand bilden, der dicht an dem Rahmen (12) montiert ist.

9. Vorrichtung nach Anspruch 2,
dadurch gekennzeichnet, daß der Rahmen (12) aus einer Halteschwelle (18) für den Ventilator und einer Platte (16) besteht, die geformt ist, um das Netz von Kanälen (14) aufzunehmen, das in Relation zu dem Wärmetauscher und dem Ventilator eingerichtet ist, wobei die Schwelle (18) und die Platte (16) von einem Schutzdeckel (17) abgedeckt sind.

10. Vorrichtung nach Anspruch 9,
dadurch gekennzeichnet, daß der Rahmen (12) aus einem einzigen Stück ausgeführt ist.

## Claims

1. Cooler apparatus designed to be mounted on an enclosure (2) and comprising a housing (3) in which at least a fan (6, 6′) and a heat exchanger (5) are mounted, the fan (6, 6′) serving to cause air to circulate between a suction inlet (8) for air to be treated and a delivery outlet (9) for treated air, the apparatus being associated, in particular, with means for collecting and evacuating the condensates that result from air passing through the heat exchanger,
characterized in that the housing (3) is provided internally with fixed means for collecting (12, 22, 26, 37, 39) and evacuating (15, 24, 34, 35) condensates in all positions in which the cooler apparatus may be mounted.

2. Apparatus according to claim 1, characterized in that the collection and evacuation means are constituted at least by :
- a chassis (12):
lying in plane substantially parallel to a mounting axis (X),
having the heat exchanger standing proud thereon,
organized to include a network of condensate recovery channels (14) opening out to at least one condensate evacuation orifice (15) referred to as a "horizontal position" orifice,
provided with a condensate deflector (22) extending in sloping manner towards the inside of the housing, between the heat exchanger and the suction inlet,
- and a collector wall (28):
standing proud from the chassis to a height that is not less than the height of the heat exchanger and in the opposite direction to the deflector (22),
fitted at the chassis with an evacuation orifice (24) referred to as a "vertical position" orifice.

3. Apparatus according to claim 2, characterized in that the collector wall (28) is an integral portion of a cover (26) including a central portion (27) extending in a plane substantially parallel to the plane containing the chassis and located relative to the heat exchanger on the side thereof that is opposite to its side occupied by the chassis (12), the central portion including a network of gutters (30₁, 30₂) communicating at each end of the central portion with at least one evacuation orifice (34, 35) referred to as an "upside-down horizontal position " orifice.

4. Apparatus according to claim 2 or 3, characterized in that the gutters (301) and/or the channels (14) serve for centering the heat exchanger (5).

5. Apparatus according to claim 3, characterized in that the condensate collector means are constituted by a condensate deflector wall (37) extending from the cover (26) between the heat exchanger and the fan, and overlying the air inlet passage of the fan.

6. Apparatus according to claim 5, characterized in that the deflector wall (37) also extends to overlie a motor (7) for driving the fan.

7. Apparatus according to claim 3, characterized in that the portion of the cover (26) comprises opposite to its portion fitted with a vertical position" evacuation orifice (24), an evacuation orifice (15) referred to as an "upside-down vertical position" orifice, communicating with a collector wall (39) extending in relationship with the fan (6) whose air outlet is connected in sealed manner to the chassis.

8. Apparatus according to claim 7, characterized in that the cover (26) includes two sloping lateral walls (40) co-operating with the collector walls (28 and 39) to form a peripheral edge mounted in sealed manner on the chassis (12).

9. Apparatus according to claim 2, characterized in that the chassis (12) is constituted by a soleplate (18) for supporting the fan and by a plate (16) shaped to include the network of channels (14) that are established in relationship to the heat exchanger and the fan, the soleplate (18) and the plate (16) being covered by a protective lid (17).

10. Apparatus according to claim 9, characterized in that the chassis (12) is made as a single piece.
